# EUROPEAN PATENT SPECIFICATION

(11) **EP 0 561 648 B1**
(45) Date of publication and mention of the grant of the patent: **13.05.1998**
(21) Application number: 93302101.6
(22) Date of filing: 19.03.1993
(51) Int. Cl.: G11B 20/10, G11B 7/00

(54) **Waveform shaping circuit suitably arranged for optically recording and reproducing apparatus**
Wellenformungsschaltung, die an ein optisches Aufzeichnungs- und Wiedergabegerät angepasst ist
Circuit de mise en forme de signaux convenablement agencé pour un appareil d'enregistrement et de reproduction optique

(30) Priority: 19.03.1992 JP 62748/92
(43) Date of publication of application: 22.09.1993
(73) Proprietor: SHARP KABUSHIKI KAISHA, Osaka-shi, Osaka-fu 545 (JP)
(72) Inventor: Fuji, Hiroshi, Nara-shi, Nara-ken (JP); Takahashi, Akira, Nara-shi, Nara-ken (JP)
(74) Representative: Brown, Kenneth Richard

(56) References cited:
- EP-A- 0 381 095
- US-A- 4 688 204
- PATENT ABSTRACTS OF JAPAN vol. 13, no. 175 (P-863)25 April 1989 & JP-A-01 008 513
- PATENT ABSTRACTS OF JAPAN vol. 10, no. 212 (P-480)(2268) 24 July 1986 & JP-A-61 050 222
- PATENT ABSTRACTS OF JAPAN vol. 10, no. 202 (P-477)(2258) 15 July 1986 & JP-A-61 045 415
- PATENT ABSTRACTS OF JAPAN vol. 11, no. 66 (P-552)(2513) 27 February 1987 & JP-A-61 229 205

## Description

### BACKGROUND OF THE INVENTION

### 1. Field of the Invention

The present invention relates to a waveform shaping circuit which is arranged for an optically recording and reproducing apparatus, and more particularly to the waveform shaping circuit which serves to convert a readout signal into a binary data and supply a digital reproduction signal.

### 2. Description of the Related Art

As a related art of the waveform shaping circuit, there can be referred to as an equalizer provided in an optically recording and reproducing apparatus. This equalizer is arranged to obtain a maximum numerical aperture of an eye pattern by adjusting the constant of the equalizer, that is, matching an envelope of the longest mark waveform (longest wavelength) to an envelope of the shortest mark waveform (shortest wavelength). This operations is an equalization for compensating for interference between the adjacent bits contained in the readout signal waveform. Hence, this operation will be referred to as a waveform equalization and the equalizer will be referred to as a waveform equalizer. This related art will be also referred to as a first related art.

As another related art, a waveform shaping circuit for an optically recording and reproducing apparatus is arranged so that the readout signal is applied into a slice signal generator for generating a signal corresponding to the central level of an envelope. This signal is used as a slice signal for waveform shaping. This circuit will be referred to as a second related art.

However, as a drawback, the first related art has difficulty in finding out the most approximate constant for reducing a bit jitter into a minimum.

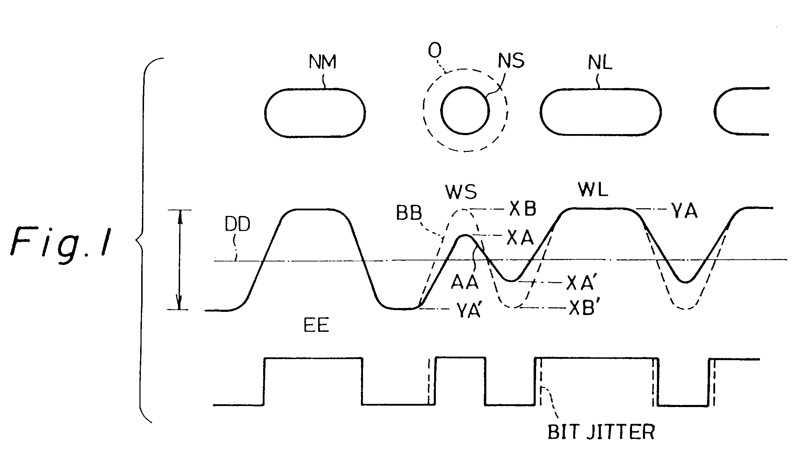

This drawback will be concretely described later as referring to Fig.1. In Fig.1, a laser spot O is used for reading a recording mark NM, NS, or NL. As a result, the readout signal AA can be obtained. However, since the recording mark NS is smaller than the laser spot O, the waveform level of the readout signal AA is smaller than those of the recording marks NM and NL. That is, as the recording mark is made shorter, the mark has a relatively smaller area against the laser spot, thereby lowering an optical resolution accordingly. In the illustration shown in Fig.1, the readout signal AA has a waveform formed to have variable waveforms from the longest mark waveform WL to the shortest mark waveform WS. The first related art is arranged to derive a proper constant of the waveform equalizer so that the envelope of the longest mark waveform WL may be made equal on the level to that of the shortest mark waveform WS in the waveform-equalized readout signal BB shown by a broken line of Fig.1. Herein, the optimum point means a point at which a numerical aperture of an eye pattern reaches a maximum value.

The applicants of the present invention have studied the operation of the first related art. The study indicates that the digital reproduction signal EE obtained by slicing the waveform-equalized readout signal AA with a slice signal DD entails a bit jitter as shown by a broken line. Hence, the digital reproduction signal EE is disadvantageously slipped out of an ideal waveform shown by a real line of Fig.1. In particular, the bit jitter is generated so that the waveform of the digital reproduction signal EE for the shortest mark NS may be elongated. It means that too much waveform-equalization is executed.

Turning to the second related art, it has the following three drawbacks, which will be discussed with reference to Fig. 1.

As the first drawback, a peak level XA of the shortest mark is smaller than a peak level YA of the longest mark of the readout signal AA. As such, if only the second related art is used, the charging voltages of the capacitors in the peak holding circuit provide variable charging voltages between these two, that is, the shortest and the longest peak waveforms. It means that the output level of the peak holding circuit is different between each of the longest mark waveform WL and the shortest mark waveform WS. For example, in an optically recording and reproducing apparatus, therefore, the readout signal AA contains variable waveforms in the range of the longest mark waveform WL to the shortest mark waveform WS. Besides, those waveforms are ranged at random in light of the length. As a result, the peak holding circuit in the optically recording and reproducing apparatus provides an abruptly-changing output signal, which makes the slice signal DD unstable.

As the second drawback, like the first related art, even if the waveform-equalization is executed for equalizing the peak levels of all the mark waveforms of the readout signal AA from the peak level YA of the longest mark waveform to the peak level XB of the shortest mark waveform, the amount of charges of the capacitor corresponding to the peak level of the shortest mark waveform are smaller than the amount of charges corresponding to the peak level of the longest mark waveform. This is because the peak level XB of the shortest mark waveform is shorter than the peak level YA of the longest mark waveform, which results in making the charging periods variable. Hence, the voltage charged in the capacitor is different between the two waveforms. The peak holding circuit provides different output levels between the longest mark waveform WL and the shortest mark waveform WS. That is, like the first drawback, the peak holding circuit supplies an abruptly-changing signal, which makes the slice signal unstable.

As the third drawback, the voltages applied on the capacitor are made to be YA-V_{D} and XB-V_{D}, since the forward voltage V_{D} is applied on the diode contained in the peak holding circuit. V_{D} means about 0.6 V in case of a silicon diode or about 0.3 V in case of a germanium diode. Like the first and the second drawbacks, therefore, those charged voltages are too low to obtain a stable slice signal.

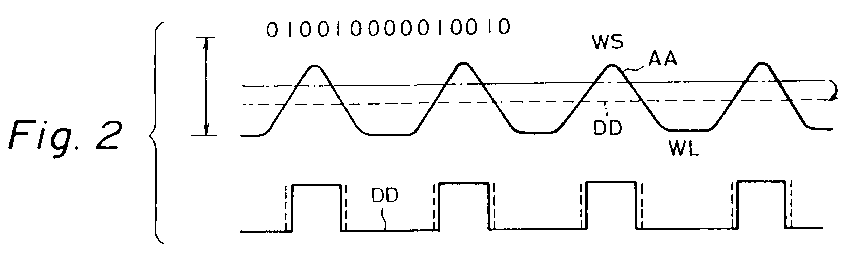

For discussing the second related art in more detail, refer to Fig.2, which illustrates a combination of the shortest mark waveforms WS directed in the positive direction and the longest mark waveforms WL directed in the negative direction. In this graph, the d.c. components of the code data are greatly shifted. This type of waveform is generated in the modifying system in which a lot of d.c. components are contained in the resulting signal such as an NRZI recording system employing 2-7 RLL modification. In the graph, the code "1001" stands for the shortest mark waveform and the code "1000001" stands for the longer mark waveform.

When the envelope-equalized readout signal AA is applied into the slice signal generator, the resulting waveform is formed so that all the peaks appearing in the positive direction are smaller than all the peaks appearing in the negative direction. By averaging those peaks, as shown by a broken line, the resulting slice signal DD is further shifted than the slice signal shown in Fig.1. It means that the digital reproduction signal EE contains a far larger bit jitter.

As set forth above, it is difficult to generate a stable slice signal in the modification system with a lot of d.c. components as shown in Fig.2, the random sequence of code data containing a few d.c. components as shown in Fig.1 and the modification system with no d.c. components.

The combination of the first and the second related arts may be easily considered. In the combination, the first related art serves to waveform-equalize the readout signal and then the second related art serves to waveform-shape the equalized signal. However, the waveform-equalizing constant used in the first related art brings about interference between the adjacent code bits, which interference results in generating a bit jitter. In the second related art, the bit jitter causes the output signal of the peak holding circuit to change more abruptly. Such an abruptly-changing output makes the slice signal unstable.

Unlike the first related art, it is possible to attenuate waveform equalization of the readout signal for reducing into a minimum the bit jitter resulting from interference between the adjacent code bits. In this case, however, the peak-level difference becomes large between the longest mark waveform WL and the shortest mark waveform WS. The peak holding circuit provided in the second related art supplies a far more abruptly changing signal, which results in disadvantageously making the slice signal DD more unstable.

Conversely, for obtaining a stable slice signal, it is possible to make the envelope level of the shortest mark waveform WS larger than the envelope level of the longest mark waveform WL. In this case, however, a larger bit jitter is brought about.

JP-A-61-45415 discloses a circuit for forming a mean value of positive and negative envelope signal. The input of the circuit is a readout analog signal. The comparator for converting an analog signal into a digital signal has two inputs for readout analog signal and the mean value signal.

JP-A-61-229205 discloses a circuit for eliminating a pattern peak shift due to a waveform interference between magnetization inversions.

EP-A-0 381 095 discloses a data reproducing circuit including a first equalizer for correcting a peakshift, a second equalizer for correcting a variation in the signal amplitude and a comparator. Both of inputs of the first and second equalizer is connected to a pre amplifier. A threshold circuit connected to the second equalizer 14 outputs pulse signals.

US-A-4 688 204 discloses a conventional circuit for outputting a pulse signal generated from the input signal and delayed signal of the input signal.

### SUMMARY OF THE INVENTION

It is an object of the present invention to provide a waveform shaping circuit which is arranged to execute waveform equalization for reducing to a minimum a bit jitter resulting from interference between the code bits and independently equalize an envelope for generating a stable slice signal.

In carrying out the object, the invention provides a waveform shaping circuit as set out in claim 1. The invention also provides an optically recording and reproducing apparatus as set out in claim 9.

In operation, in addition to the first equalizer for reducing a bit jitter to a minimum, the second equalizer is located to equalize the envelope for making the slice signal stable. Hereafter, to distinguish the second equalizer from the first equalizer, the first equalizer is referred to as a waveform equalizer and the second equalizer is referred to as an envelope equalizer.

The waveform equalizer enables to reduce to a minimum the bit jitter resulting from the interference between the code bits. The envelope equalizer independently enables to make the peak level of the shortest mark waveform equal to or higher than the peak level of the longest mark waveform. Hence, any of the waveforms enables to fill the same amount of charges into the capacitors of the peak holding circuit. Further, the voltage applied in the forward direction of the diode is allowed to be compensated in a manner to make the voltage charged into the capacitor accurate, thereby making the slice signal stable.

In addition, in a case that the peak holding circuit has only a quite short charging time for charging the capacitor, the charging period for the peak level of the shortest mark waveform is enough long to charge the capacitor. In this case, the envelope equalizer enables to make the peak level of the longest mark waveform equal to the peak level of the shortest mark waveform.

Further objects and advantages of the present invention will be apparent from the following description of the preferred embodiments of the invention as illustrated in the accompanying drawings.

### BRIEF DESCRIPTION OF THE DRAWINGS

Fig.1 is a graph showing a waveform produced by the related art of the present invention;
Fig.2 is a graph showing a waveform produced by the related art of the present invention;
Fig.3 is a block diagram showing an essential part of a magneto-optical disk to which the present invention may apply;
Fig. 4 is a circuit diagram showing a waveform shaping circuit according to a first embodiment of the present invention;
Fig. 5 is a circuit diagram showing an arrangement of a waveform equalizer or an envelope equalizer included in the waveform shaping circuit shown in Fig. 4;
Fig. 6 is a circuit diagram showing another arrangement of a waveform equalizer or an envelope equalizer included in the waveform shaping circuit shown in Fig. 4;
Fig. 7 is a circuit diagram showing a slice signal generator included in the waveform shaping circuit shown in Fig. 4;
Fig. 8 is a graph showing a waveform produced by the waveform shaping circuit shown in Fig. 4;
Fig. 9 is a graph showing another waveform produced by the waveform shaping circuit shown in Fig. 4; and
Fig.10 is a circuit diagram showing a waveform shaping circuit according to a second embodiment of the present invention.

### DESCRIPTION OF THE PREFERRED EMBODIMENTS

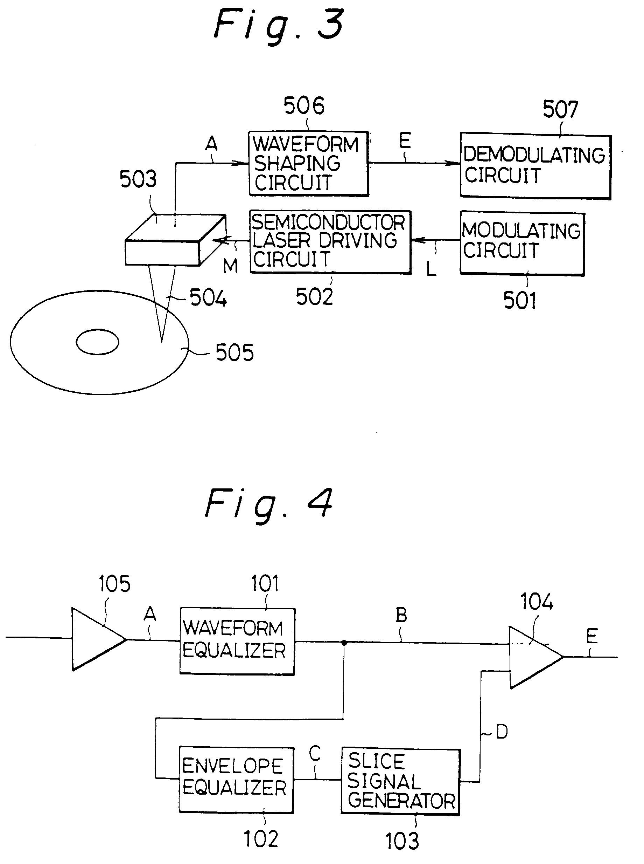

A waveform shaping circuit will be explained according to a first embodiment of the present invention, referring to Figs. 3 to 9.

Fig.3 shows an essential part of a magneto-optical disk unit. In Fig. 3, a numeral 501 denotes a modulating circuit which operates to modulate recording data into a modulated signal L and send out the signal L to a semiconductor laser driving circuit 502. The circuit 502 supplies a driving current M to a semiconductor laser provided in an optical pickup unit 503. The semiconductor laser serves to apply a laser beam 504 onto a magneto-optical disk 505. The light reflected on the disk 505 is converted into a readout signal A through the effect of a photo-diode contained in the optical pickup unit 503. The readout signal A is sent out to a waveform shaping circuit 506. The circuit 506 serves to convert the readout signal A into a binary digital reproduction signal E and send out the signal E to a demodulating circuit 507 in which the data is demodulated in response to the signal E.

Fig. 4 is a circuit diagram showing the waveform shaping circuit 506 shown in Fig. 3. In the circuit 506, a numeral 105 denotes an amplifier 105 which serves to amplify the readout signal A and guide the amplified signal into a waveform equalizer 101 in which the signal is waveform-equalized into a signal B. The waveform-equalized signal B is sent out to one input terminal of a comparator 104 and an envelope equalizer 102. The envelope equalizer 102 sends the envelope-equalized signal C out to a slice signal generator 103 from which a slice signal D is guided into the other input terminal of the comparator 104. The comparator 104 compares the waveform-equalized signal B with the slice signal D for obtaining the digital reproduction signal E.

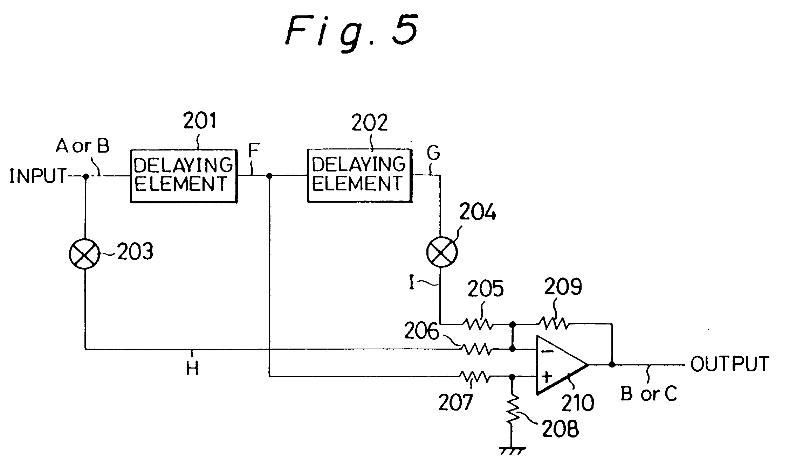

Fig.5 is a circuit diagram showing the detail of the waveform equalizer 101 or the envelope equalizer 102 shown in Fig. 4. This is a commonly known transversal filter which may be used for the waveform equalizer 101 or the envelope equalizer 102. The readout signal A or the waveform-equalized signal B is applied into a delaying element 201 and a multiplier 203. The delaying element 201 supplies a delayed signal F into another delaying element 202 and a resistor 207. The delaying element 202 supplies a delayed signal G into a multiplier 204. The multipliers 203 and 204 apply the output signals H and I into resistors 206 and 205, respectively. The resistors 205, 206, 207, 208, 209 and an operational amplifier 210 compose an adder-subtracter, from which the waveform-equalized signal B or the envelope-equalized signal C is output.

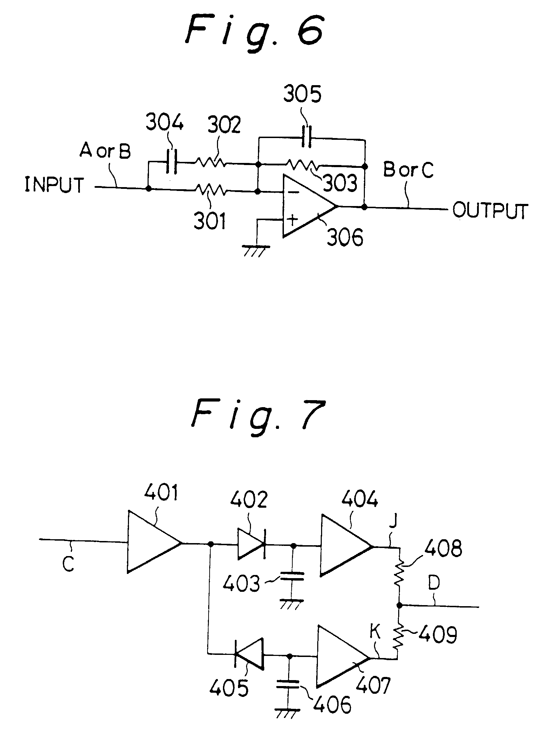

Fig.6 is a circuit diagram showing another arrangement of the waveform equalizer 101 or the envelope equalizer 102 shown in Fig. 4. This is also a commonly known waveform equalizer composed of resistors, a capacitor and an operational amplifier. The readout signal A or the waveform-equalized readout signal B is applied into a resistor 301 and a capacitor 304. The resistors 301, 302, 303, the capacitors 304, 305 and the operational amplifier 306 compose a waveform equalizer. The waveform equalizer serves to output a waveform-equalized readout signal B or the envelope-equalized signal C.

Fig. 7 is a circuit diagram showing the detail of the slice signal generator 103 shown in Fig. 4. This is also a commonly known circuit for generating a signal matching to a central level between an upper envelope and a lower envelope of the waveform-equalized readout signal. The envelope-equalized readout signal C is applied into a buffer 401. The buffer 401 serves to apply an output signal into a peak holding circuit for the positive-directional waveform composed of a diode 402, a capacitor 403 and a buffer 404 and the other peak holding circuit for the negative-directional waveform composed of a diode 405, a capacitor 406 and a buffer 407. The buffer 404 supplies an output signal J which corresponds to an upper envelope signal of the envelope-equalized readout signal C. The buffer 407 supplies an output signal K which corresponds to a lower envelope signal thereof. The resistors 408 and 409 make it possible to generate a slice signal matching to the central level between these two envelope signals.

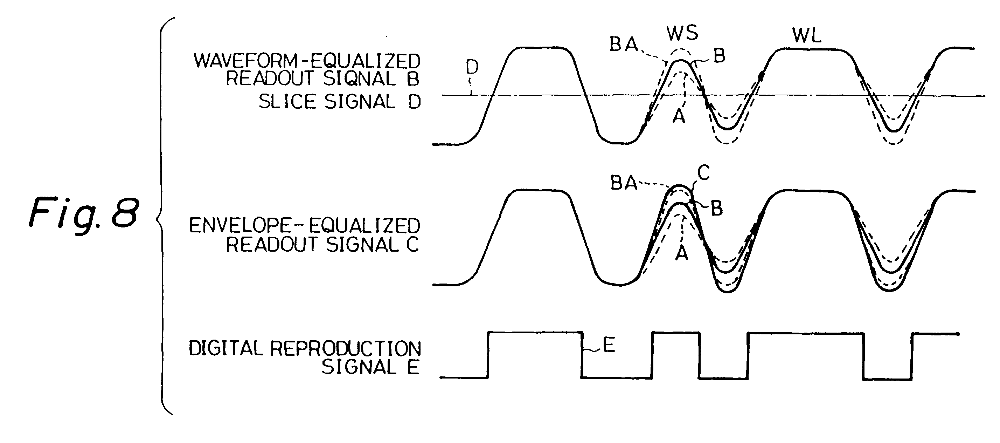

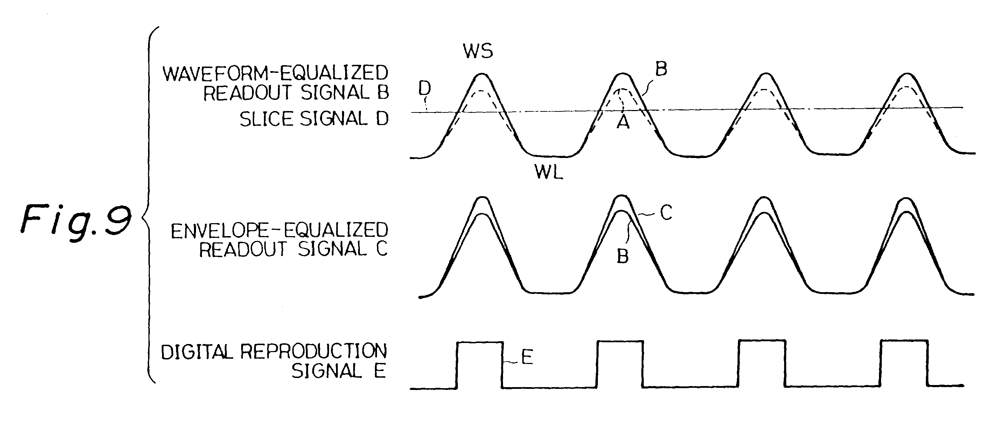

Figs. 8 and 9 are graphs showing the waveforms appearing in Figs. 3 to 7. In Fig. 8, the readout signal A shows a waveform formed to have variable waveforms in the range of the longest mark waveform WL to the shortest mark waveform WS. The waveform equalizer 101 serves to execute the waveform equalization in a manner to reduce into a minimum the bit jitter resulting from the interference between the code bits and output the waveform-equalized readout signal B. The signal B has an intermediate strength between the readout signal A and the signal BA since the readout signal A is too weak and the signal BA is too strong. The readout signal A is adjusted to be equal to the level of the signal A read out of the optical pickup unit 503 shown in Fig.3. The readout signal BA is adjusted to make the shortest mark waveform WS equal to the longest mark waveform WL. In addition, the interference between the code bits changes depending on the ideal form of a laser spot. It goes without saying that the optimal amount of the waveform equalization may be shifted out of the intermediate point between the signals A and BA.

Next, the waveform-equalized readout signal B is envelope-equalized in the envelope equalizer (see Fig. 4) from which the envelope-equalized readout signal C can be obtained. In this signal C even the shortest mark waveform WS can provide a sufficient capability of filling charges into the capacitors 403 and 406 of the peak holding circuit. This is because the readout signal is waveform-equalized in a manner to make the shortest mark waveform WS equal to the longest mark waveform WL and then is adjusted to compensate for the shorter charging period of the shortest mark waveform WS than the longest mark waveform WL (signal **BA**) and to execute such an equalization C as compensating for the forward-directional voltage of the diodes 402 and 405.

The envelope-equalized readout signal C is applied into the slice signal generator 103. The generator 103 enables to supply a stable slice signal D. The comparator 104 compares the waveform-equalized readout signal B with the stable slice signal D and converts the resulting signal into a binary signal. The binary signal, therefore, corresponds to the digital reproduction signal E containing no jitter.

Fig. 9 is a graph showing a combination of the shortest mark waveforms WS and the longest mark waveforms WL ranged in an alternate manner. In the combination, the shortest mark waveforms WS are located on the positive side and the longest mark waveforms WL are located on the negative side. In the graph, the d.c. components of the code data are greatly shifted. This type of signal appears in the modification system in which a lot of d.c. components are contained, such as an NRZI recording system using a 2-7 RLL modification type. Like the signals shown in Fig. 8, the waveform equalizer 101 serves to waveform-equalize the readout signal A in a manner to reduce to a minimum the bit jitter caused by the interference between the code bits. The resulting signal is a waveform-equalized signal B. The signal has the same strength as that shown in Fig. 8.

Next, the waveform-equalized readout signal B is applied into the envelope equalizer 102 (see Fig. 4). The envelope equalizer 102 serves to envelope-equalize the signal B so that the peak level of the shortest mark waveform is made equal to the peak level of the longest mark waveform. The output signal of the envelope equalizer 102 corresponds to a signal C (see Fig. 9).

If the slice signal generator 103 includes the peak holding circuits, as shown in Fig. 7, the envelope equalizer 102 also serves to compensate the slice signal generator 103 by making the peak level of the shortest mark waveform higher than the peak level of the longest mark waveform enough to charge the capacitors of the peak holding circuits. The signal C also has the same strength as that shown in Fig.8.

Then, such an envelope-equalized readout signal C is applied into the slice signal generator 103. Hence, the slice signal generator 103 enables to supply a stable slice signal D. The stable slice signal D is sent to the comparator 104 in which the slice signal D is compared with the waveform-equalized readout signal B and the resulting signal is converted into a binary signal. The binary signal corresponds to a digital reproduction signal E containing no jitter.

As set forth above, the waveform shaping circuit of the present invention may apply to the random sequence of code data containing no d.c. components shown in Fig. 8 or a modification system with no d.c. components as well as the modification system with a lot of d.c. components as shown in Fig. 9. The waveform shaping circuit enables to reduce to a minimum a bit jitter resulting from the interference between code bits to generate a stable slice signal.

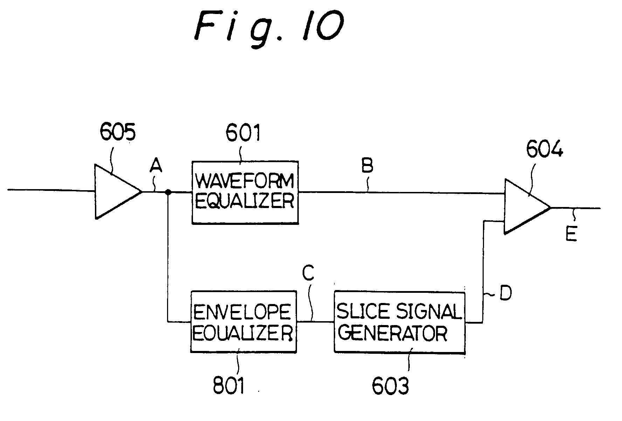

In turn, a waveform shaping circuit will be explained according to a second embodiment of the present invention, referring to Fig. 10.

As will be understood from the circuit shown in Fig. 10, the waveform equalizer 601 is the same as the waveform equalizer 101 shown in Fig.4. The envelope equalizer 801 corresponds to a combination of the waveform equalizer 101 and the envelope equalizer 102 shown in Fig.4. This circuit operates in the same manner as the circuit according to the first embodiment. Hence, the description about the operation will be omitted herein.

The foregoing embodiments have concerned with the waveform shaping circuit provided in a magneto-optical disk unit. In actual, those embodiments may apply to a write-once read-many optical disk unit, an optical card unit or an optical tape unit.

According to the present invention, the waveform equalizer enables to reduce to a minimum the bit jitter resulting from the interference between the code bits. The envelope equalizer independently makes the slice signal stable.

## Claims

1. A waveform shaping circuit for use in an optically recording or reproducing apparatus for shaping a waveform of an optically readout signal sent from an optical pickup unit, comprising a first equalizer (101) connected to receive said optically readout signal for equalizing a waveform of said optically readout signal to compensate for interference between code bits, a second equalizer (102) for equalizing an envelope of said readout signal to make a peak level of a shortest mark waveform equal to or higher than a peak level of a longest mark waveform, and a comparator (104) for converting said waveform-equalized readout signal into a binary signal,
characterized in that said waveform shaping circuit further comprises a slice signal generator (103) connected for receiving an envelope-equalized signal output from said second equalizer (102) for generating a slice signal corresponding to a central level between an upper envelope and a lower envelope of said envelope-equalized signal, and said comparator (104) converts said waveform-equalized readout signal into a binary signal by comparing said waveform-equalized signal with said slice signal.

2. A waveform shaping circuit as claimed in claim 1, wherein said second equalizer (102) is connected to receive the waveform-equalized readout signal output from said first equalizer (101).

3. A waveform shaping circuit as claimed in claim 1 or 2, wherein said first equalizer (101) minimizes the bit jitter resulting from the interference between adjacent code bits.

4. A waveform shaping circuit as claimed in any one of claims 1 to 3, wherein said second equalizer (102) has the same circuitry as that of said first equalizer (101).

5. A waveform shaping circuit as claimed in any one of claims 1 to 4, characterized in that at least one of said first equalizer (101) and said second equalizer (102) includes a transversal filter having two delaying elements (201, 202), two multipliers (203, 204) and an adder-subtracter (205-210).

6. A waveform shaping circuit as claimed in any one of claims 1 to 4, characterized in that at least one of said first equalizer (101) and said second equalizer (102) includes a waveform equalizer having resistors (301-303), capacitors (304, 305) and an operational amplifier (306).

7. A waveform shaping circuit as claimed in any one of claims 1 to 6, characterized in that said slice signal generator (103) includes two peak holding circuits (402-404, 405-407) for respective waveforms of positive and negative directions, and a voltage divider (408, 409) for generating a central level between two envelope signals.

8. A waveform shaping circuit as claimed in claim 7, characterized in that each of said peak holding circuit (402-404, 405-407) includes a diode (402, 405), a capacitor (403, 406) and a buffer (404, 407).

9. A waveform shaping circuit as claimed in any one of claims 1 to 8, characterized in that said circuit further comprises an amplifier (105) located before said first equalizer (101).

10. An optically recording or reproducing apparatus comprising a waveform shaping circuit as claimed in any one of claims 1 to 9.

## Patentansprüche

1. Schaltung zur Signalverlaufsformung zur Verwendung in einem optischen Aufzeichnungs- oder Wiedergabegerät zum Formen des Signalverlaufs eines von einer optischen Aufnahmeeinheit gelieferten optischen Auslesesignals, mit einem ersten Equalizer (101), der so angeschlossen ist, dass er das optische Auslesesignal empfängt, um den Signalverlauf dieses optischen Auslesesignals so auszugleichen, dass für Kompensation einer Wechselwirkung zwischen Codebits gesorgt ist, einem zweiten Equalizer (102) zum Ausgleichen der Hüllkurve des Auslesesignals, um dafür zu sorgen, dass der Spitzenpegel des Signalverlaufs für die kürzeste Markierung mit dem Spitzenpegel des Signalverlaufs für die längste Markierung übereinstimmt oder höher ist als dieser, und einem Komparator (104) zum Umwandeln des hinsichtlich des Signalverlaufs ausgeglichenen Auslesesignals in ein binäres Signal;
**dadurch gekennzeichnet,** dass diese Schaltung zur Signalverlaufsformung ferner einen Zeitscheibensignal-Generator (103) aufweist, der so angeschlossen ist, dass er das vom zweiten Equalizer (102) ausgegebene, hinsichtlich der Hüllkurve ausgeglichene Signal empfängt, um ein Zeitscheibensignal zu erzeugen, das dem mittleren Pegel zwischen der oberen und der unteren Hüllkurve des hinsichtlich der Hüllkurve ausgeglichenen Signals entspricht, und der Komparator (104) das hinsichtlich des Signalverlaufs ausgeglichene Auslesesignal dadurch in ein binäres Signal wandelt, dass er dieses hinsichtlich des Signalverlaufs ausgeglichene Signal mit dem Zeitscheibensignal vergleicht.

2. Schaltung zur Signalverlaufsformung nach Anspruch 1, bei der der zweite Equalizer (102) so angeschlossen ist, dass er das vom ersten Equalizer (101) ausgegebene, hinsichtlich des Signalverlaufs ausgeglichene Auslesesignal empfängt.

3. Schaltung zur Signalverlaufsformung nach Anspruch 1 oder 2, bei der der erste Equalizer (101) den Bitjitter minimiert, der von der Wechselwirkung zwischen benachbarten Codebits herrührt.

4. Schaltung zur Signalverlaufsformung nach einem der Ansprüche 1 bis 3, bei der der zweite Equalizer (102) denselben Schaltungsaufbau wie der erste Equalizer (101) aufweist.

5. Schaltung zur Signalverlaufsformung nach einem der Ansprüche 1 bis 4, **dadurch gekennzeichnet,** dass vom ersten Equalizer (101) und vom zweiten Equalizer (102) zumindest einer ein Transversalfilter mit zwei Verzögerungselementen (201, 202), zwei Multiplizierern (203, 204) und einen Addierer-Subtrahierer (205-210) aufweist.

6. Schaltung zur Signalverlaufsformung nach einem der Ansprüche 1 bis 4, **dadurch gekennzeichnet,** dass vom ersten Equalizer (101) und vom zweiten Equalizer (102) zumindest einer einen Signalverlaufsequalizer mit Widerständen (301-303), Kondensatoren (304, 305) und einem Operationsverstärker (306) aufweist.

7. Schaltung zur Signalverlaufsformung nach einem der Ansprüche 1 bis 6, **dadurch gekennzeichnet,** dass der Zeitscheibensignal-Generator (102) zwei Spitzenwert-Halteschaltungen (402-404, 405-407) für jeweilige Signalverläufe in positiver bzw. negativer Richtung sowie einen Spannungsteiler (408, 409) zum Erzeugen des mittleren Pegels zwischen zwei Hüllkurvensignalen aufweist.

8. Schaltung zur Signalverlaufsformung nach Anspruch 7, **dadurch gekennzeichnet,** dass von den Spitzenwert-Halteschaltungen (402-404, 405-407) jede eine Diode (402, 405), einen Kondensator (403, 406) und einen Puffer (404, 407) aufweist.

9. Schaltung zur Signalverlaufsformung nach einem der Ansprüche 1 bis 8, **dadurch gekennzeichnet,** dass die Schaltung ferner einen Verstärker (105) aufweist, der vor dem Equalizer (101) liegt.

10. Optisches Aufzeichnungs- oder Wiedergabegerät mit einer Schaltung zur Signalverlaufsformung, wie sie in einem der Ansprüche 1 bis 9 beansprucht ist.

## Revendications

1. Circuit de mise en forme de forme d'onde destiné à une utilisation dans un appareil d'enregistrement ou de reproduction optique pour mettre en forme une forme d'onde d'un signal lu optiquement qui est transmis par une unité de lecture optique, comprenant un premier égaliseur (101) connecté de manière à recevoir ledit signal lu optiquement pour égaliser une forme d'onde dudit signal lu optiquement afin de compenser une interférence entre des bits de code, un second égaliseur (102) pour égaliser une enveloppe dudit signal lu afin de rendre un niveau de crête d'une forme d'onde de marque de durée minimale égal ou supérieur à un niveau de crête d'une forme d'onde de marque de durée maximale, et un comparateur (104) pour convertir ledit signal lu à forme d'onde égalisée en un signal binaire,
caractérisé en ce que ledit circuit de mise en forme de forme d'onde comprend également un générateur de signal segmenté (103) connecté de manière à recevoir un signal à enveloppe égalisée délivré par ledit second égaliseur (102) pour produire un signal segmenté correspondant à un niveau central entre une enveloppe supérieure et une enveloppe inférieure dudit signal à enveloppe égalisée, et ledit comparateur (104) convertit ledit signal lu à forme d'onde égalisée en un signal binaire en comparant ledit signal à forme d'onde égalisée audit signal segmenté.

2. Circuit de mise en forme de forme d'onde selon la revendication 1, dans lequel ledit second égaliseur (102) est connecté de manière à recevoir le signal lu à forme d'onde égalisée délivré par ledit premier égaliseur (101).

3. Circuit de mise en forme de forme d'onde selon la revendication 1 ou 2, dans lequel ledit premier égaliseur (101) minimise l'instabilité des bits résultant de l'interférence entre des bits de code adjacents.

4. Circuit de mise en forme de forme d'onde selon l'une quelconque des revendications 1 à 3, dans lequel ledit second égaliseur (102) a le même circuit que celui dudit premier égaliseur (101).

5. Circuit de mise en forme de forme d'onde selon l'une quelconque des revendications 1 à 4, caractérisé en ce qu'au moins l'un desdits premier (101) et second (102) égaliseurs inclut un filtre transversal ayant deux éléments de retard (201, 202), deux multiplieurs (203, 204) et un additionneur-soustracteur (205 à 210).

6. Circuit de mise en forme de forme d'onde selon l'une quelconque des revendications 1 à 4, caractérisé en ce qu'au moins l'un desdits premier (101) et second (102) égaliseurs inclut un égaliseur de forme d'onde ayant des résistances (301 à 303), des condensateurs (304, 305) et un amplificateur opérationnel (306).

7. Circuit de mise en forme de forme d'onde selon l'une quelconque des revendications 1 à 6, caractérisé en ce que ledit générateur de signal segmenté (103) inclut deux circuits bloqueurs de niveau de crête (402 à 404, 405 à 407) pour des formes d'onde respectives de signes positif et négatif, et un diviseur de tension (408, 409) pour produire un niveau central entre deux signaux d'enveloppe.

8. Circuit de mise en forme de forme d'onde selon la revendication 7, caractérisé en ce que chacun desdits circuits bloqueurs de niveau de crête (402 à 404, 405 à 407) inclut une diode (402, 405), un condensateur (403, 406) et un amplificateur-séparateur (404, 407).

9. Circuit de mise en forme de forme d'onde selon l'une quelconque des revendications 1 à 8, caractérisé en ce que ledit circuit comprend également un amplificateur (105) situé avant ledit premier égaliseur (101).

10. Appareil d'enregistrement ou de reproduction optique comprenant un circuit de mise en forme de forme d'onde selon l'une quelconque des revendications 1 à 9.
